# EUROPEAN PATENT SPECIFICATION

(11) **EP 2 273 411 B1**
(45) Date of publication and mention of the grant of the patent: **01.04.2015**
(21) Application number: 10165175.0
(22) Date of filing: 08.06.2010
(51) Int. Cl.: G06F 21/00

(54) **Systems and methods for determining authorization to operate licensed software based on a client device fingerprint**
Systeme und Verfahren zur Bestimmung der Autorisierung zum Betreiben lizenzierter Software basierend auf einem Client-Vorrichtungsfingerabdruck
Systèmes et procédés pour déterminer l'autorisation pour utiliser un logiciel sous licence en fonction d'une empreinte de dispositif client

(30) Priority: 24.06.2009 US 220096 P
(43) Date of publication of application: 12.01.2011
(73) Proprietor: Uniloc USA, Inc., Plano TX 75024 (US)
(72) Inventor: Etchegoyen, Craig Stephen, Irvine, CA 92612 (US)
(74) Representative: Casbon, Paul Richard

(56) References cited:
- WO-A1-2009/065135
- DE-A1- 10 155 755
- US-A1- 2006 242 081
- US-A1- 2008 244 754
- US-B1- 6 243 468
- TERENCE SIM ET AL: "Continuous Verification Using Multimodal Biometrics", IEEE TRANSACTIONS ON PATTERN ANALYSIS AND MACHINE INTELLIGENCE, IEEE SERVICE CENTER, LOS ALAMITOS, CA, US, vol. 29, no. 4, 1 April 2007 (2007-04-01), pages 687-700, XP011168507, ISSN: 0162-8828, DOI: DOI:10.1109/TPAMI.2007.1010
- JUSTIN MUNCASTER ET AL: "Continuous Multimodal Authentication Using Dynamic Bayesian Networks", SECOND WORKSHOP ON MULTIMODAL USER AUTHENTICATION, 1 January 2006 (2006-01-01), XP55003041,

## Description

### Field of the Invention

The present disclosure relates to an apparatus and a method for monitoring operations of licensed software and, more particularly, to an apparatus and a method for determining if a licensed software has been previously used on a computer by monitoring an identifier associated with the computer on which the licensed software is to be used.

### Description of Related Art

Traditionally, software publishers have generated revenue for their proprietary software through selling licenses to end-users. The hallmark of proprietary software licenses is that the software publisher grants a license to use one or more copies of software, but that ownership of those copies remains with the software publisher. One consequence of this feature of proprietary software licenses is that virtually all rights regarding the software are reserved by the software publisher and only a limited set of well-defined rights are conceded to the end-user. An example of such proprietary software license is a limited license agreement through which software is purchased with limits and restrictions on the number of copies available for installation or use.

Limited licenses are sometimes limited to a designated number of computers or to a specific number of users operating the software. Some limited licenses may restrict use to certain computing facilities, such as educational institutional facilities where the software is licensed for use solely in support of classroom instruction and/or research activities.

Despite these licenses, piracy remains an ever-present threat to software publishers. Acts of piracy may include mass counterfeiting schemes, loading a single licensed copy of software onto multiple machines, and/or the creation of backup copies. Although software publishers have focused on incorporating security measures into software to prevent software piracy, hackers and pirates typically and eventually find ways to bypass or circumvent these security measures.

An ordinary software user is typically not as sophisticated as software hackers and pirates. Although the ordinary software user may install pirated software on a computer, the user typically does not change the computer settings and other installed components on the computer. Accordingly, there is a need for security measures that would eliminate software piracy based on components on a user's computer.

WO 2009/065135 discloses techniques for adjusting the number of devices allowed to use a digital product (e.g., software) under a license. In one embodiment, the technique may involve setting the allowed number of devices to a first upper/lower limit for a first time period, and, after the first time period has expired, increasing/lowering the allowed number of devices to a second upper/lower limit for a second time period. The technique may involve, readjusting the allowed number for a third time period, thereby allowing for a changing number of device installations of the digital product.

### SUMMARY OF THE INVENTION

Methods and systems disclosed herein may be used to determine if licensed software has been previously installed or used on a device by monitoring an identifier associated with the device on which the licensed software is to be installed or used. Prior to operation of licensed software, a client device requires authorization from a license server. The license server may retrieve a unique identifying device fingerprint or device identifier from the client device in order to authorize installation of the software.

According to the present invention there is provided an apparatus as set out in claim 1. Further features of the apparatus are set out in claims 2 to 6 to which attention is hereby directed.

According to another aspect of the present invention there is provided a method as set out in claim 7. Further steps of the method are set out in claims 8 to 10 to which attention is hereby directed.

### BRIEF DESCRIPTION OF THE DRAWINGS

The accompanying drawings, which are included to provide a further understanding of the invention and are incorporated in and constitute a part of this specification, illustrate embodiments of the invention that together with the description serve to explain the principles of the invention, wherein:
FIG. 1 illustrates one embodiment of a system for determining if licensed software has been previously installed or used on a client device;
FIG. 2 illustrates another embodiment of a system for dynamically determining whether licensed software may be installed or used by a client device; and
FIG. 3 illustrates an implementation of an embodiment of the invention.

### DETAILED DESCRIPTION

Methods, systems, and other aspects of the invention are described in more detail below. Reference will be made to certain embodiments of the invention, examples of which are illustrated in the accompanying drawings. While this invention will be described in conjunction with the embodiments, it will be understood that it is not intended to limit the invention to these particular embodiments. On the contrary, the invention is applicable to alternatives, modifications and equivalents that are within the scope of the invention. The specification and drawings are, accordingly, to be regarded in an illustrative rather than a restrictive sense. Moreover, in the following description, numerous specific details are set forth to provide a thorough understanding of the invention. However, it will be apparent to one of ordinary skill in the art that the disclosed embodiments and alternatives may be practiced without these particular details. In other instances, methods, procedures, components, and networks that are well known to those of ordinary skill in the art are not described in detail to avoid obscuring aspects of the present invention.

According to certain embodiments, methods and systems may be used to determine if licensed software has been previously operated on a device. The determination may be made by monitoring an identifier associated with the device on which the licensed software is to be installed or used. The systems and methods may comprise both server-side and client-side components, and one of ordinary skill in the art will find that there are a variety of ways to design a client or server architecture. Therefore, the systems and methods disclosed herein are not limited to a specific client or server architecture, and encompass variations and modifications embodying the inventive systems and methods disclosed herein.

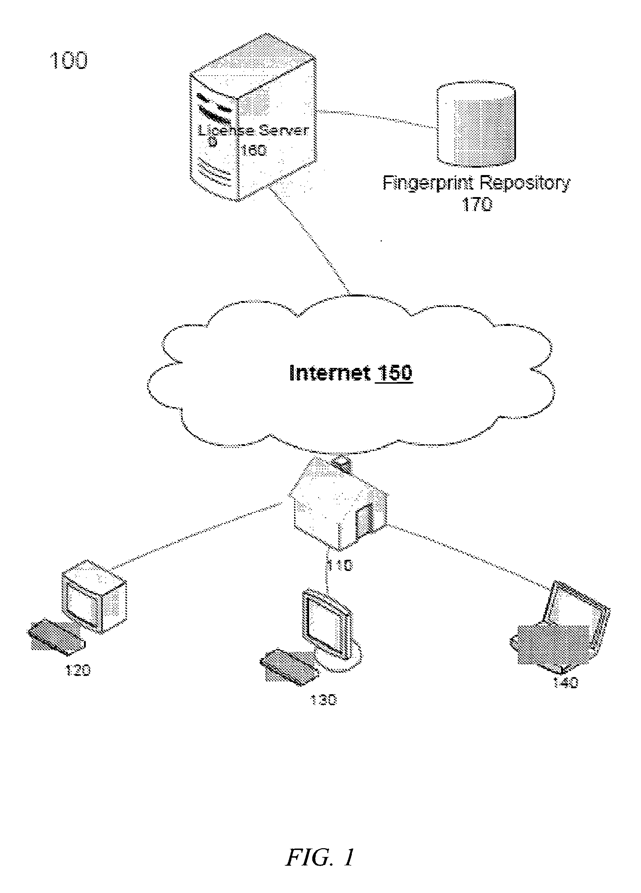

FIG. 1 illustrates one embodiment of a system 100 for determining if licensed software has been previously installed or used on client device(s) 120, 130, and/or 140. Although the example in FIG. 1 illustrates client devices 120, 130, 140 as being part of a local area network (LAN) 110 associated with a single household, it is understood that they may not be so associated.

Client devices 120, 130, 140 are depicted to be in communication with a license server 160 via a communications network 150. In certain embodiments, client devices 120, 130 and 140 may be connected to license server 160 through the Internet. As is known to those skilled in the art, in order for client devices 120, 130 and 140 to connect to license server 160 through the Internet, each client device 120, 130 and 140 may execute a browser application where web pages or applications associated with license server 160 may be loaded.

If a client device requires authorization from license server 160 prior to installing licensed software, during installation of the software, license server 160 may retrieve a unique identifying device fingerprint from the client device in order to authorize installation of the software. Similarly, if a client device requires authorization from license server 160 prior to use of licensed software, license server 160 may retrieve the unique device fingerprint from the client device in order to authorize use of the software. For example, license server 160 may retrieve the device fingerprint from client device 120, 130, 140 for license server 160 to determine if granting authorization for client device 120, 130, 140 to install or use the software would comply with limits associated with the software license. If the license server 160 determines that granting an installation or use authorization to the client device would be within the software license limit, then an unlock key may be generated by license server 160 and communicated to the client device.

Upon receiving the unlock key from license server 160, client device 120, 130 and 140 may then install or use the software. The licensed software may be downloaded from a remotely-located server or encoded in a computer-readable media of a data storage device which, when loaded onto client device 120, 130, 140, causes client device 120, 130, 140 to perform the client-side processes and outputs.

If license server 160 determines that granting authorization to client device 120, 130, 140 would not comply with the software license limit, then license server 160 may provide client device 120, 130, 140 with an option to purchase additional installation or usage rights or license server 160 may deny the request and the software installation or execution on the client device may be terminated.

According to certain embodiments, prior to requesting authorization from license server 160, client device 120, 130, 140 may execute the web browser and load an identification web page associated with the license server 160. The identification web page may be executed from license server 160. Upon client device 120, 130, 140 loading the identification web page, license server 160 may examine client device 120, 130, 140 for a browser-based forensic fingerprint. In certain embodiments the browser-based forensic fingerprint may include the IP address of client device 120, 130, 140, the version of the browser being executed by client device 120, 130, 140 and a list of any software exposed to the browser being executed by client device 120, 130, 140. Examples of listings of browser visible software may include cached images, history, cookies and other visible browser settings. It should be apparent to one skilled in the art, that the forensic fingerprint may include other elements in addition to or instead of those listed above.

License server 160 may then associate a value with the obtained forensic fingerprint. The value may be examined using a probabilistic model and compared to previously stored fingerprints to determine if the newly obtained fingerprint is equal to a previously stored fingerprint. For example, the probabilistic model may determine that the obtained forensic fingerprint is equal to a previously stored fingerprint for a client device where the IP address was previously stored and where a percentage of the obtained browser visible software was also previously stored and associated with the stored IP address. Thus, with a fair amount of accuracy, server 160 may determine if the obtained fingerprint matches a previously stored fingerprint, even if one or more components on the client device has been removed or changed.

License server 160 may determine if the number of times a unique device fingerprint is retrieved for a given license identifier exceeds a given threshold as determined by an associated software license. License server 160 may then authorize client requests for access to software associated with a license if license server 160 determines that the number of times a unique device fingerprint is retrieved for a given license identifier is within the parameters of the software license. License server 160 stores each obtained fingerprint in an associated fingerprint database 170 to be used in determining whether future authorization requests should be granted or denied.

Because, in certain embodiments, the components of the fingerprint are visible to a browser application, the fingerprint may be obtained from client device 120, 130, 140 without the need to install additional software on the client device. There is also no need for client device 120, 130, 140 to submit to additional security checks or additional software installations.

Client devices 120, 130, 140 may be any device or machine capable of communicating with a communications network 150. Preferably, the client device may include a processor that is operatively connected to a memory and a display to operate the software. Thus, suitable client devices include game consoles, personal desktop computers, portable laptop computers, server computers, tablet computers, personal digital assistants, mobile phones, wireless communication devices, onboard vehicle computers, and the like.

The communications network 150 may comprise the Internet, a cellular communications network, a satellite communications network, a local area network, or a combination of these or other suitable network.

The license server 160 may include one or more processors configured to receive device fingerprint and license data and ascertain the particular license rights pertaining to the client device. The license server 160 may also include memory for storing programming instructions and/or data. License server 160 may be in communication with a fingerprint database 170 comprising stored licensed rights corresponding to a plurality software licenses and device fingerprints. The information in database 170 permits license server 160 to ascertain whether a particular device fingerprint corresponding to a client device is covered under a license to the software. The information in database 170 further permits license server 160 to ascertain the number of different device fingerprints which have been authorized to install or operate the licensed software.

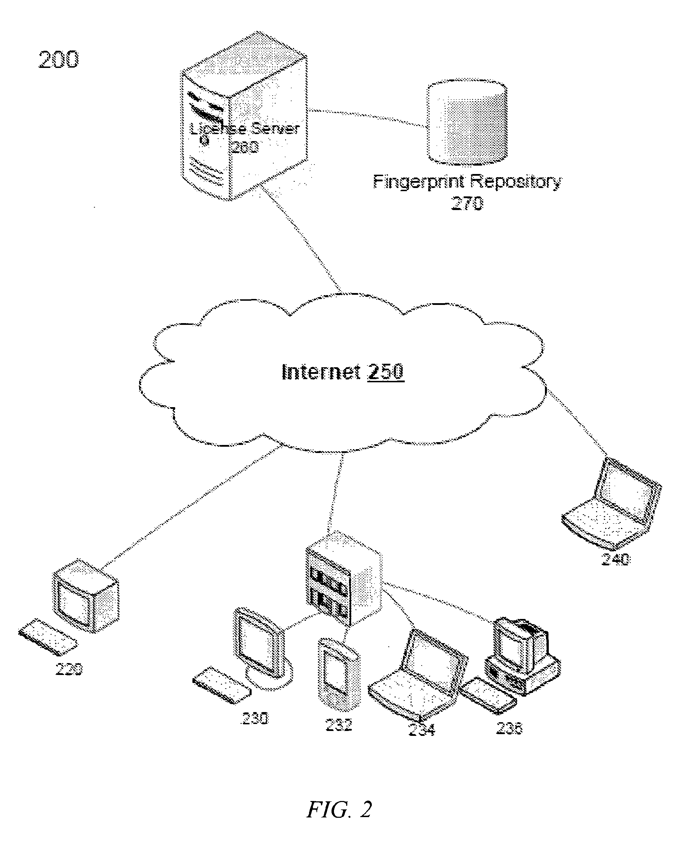

FIG. 2 illustrates another embodiment of a system 200 for dynamically determining whether licensed software is to be operated by a client device. Client devices may be independent of other client devices and may be located in a different location, for example as shown with devices 220 and 240, or independent client devices may be located in one location, for example as shown with devices 230-236. Client devices 220-240 are shown to be in communication with a license server 260. License server 260 may retrieve a uniquely device fingerprint associated with each client device 220-240 via a communications network 250.

License server 260 may determine if the number of times a unique device fingerprint is retrieved for a given license identifier exceeds a given threshold. The threshold may be a predefined number associated with licensed software as determined by the licensor or software publisher. For example, if client device 220 is associated with a single use license, license server 260 may determine if the device fingerprint associated with client device 220 was previously stored. If it is determined that client device 220 is attempting to reinstall software associated with a single use license, because the device fingerprint was previously stored, then license server 260 may deny the installation request and terminate installation of the software. In another example, if client devices 230-236 are associated with a multi-use license, license server 260 may determine if the device fingerprints associated with client devices 230-236 were previously stored and if the number of installations requested by client devices 230-236 exceeds a threshold associated with the software license. License server 260 may permit installation of the software on client devices 230-236 until the threshold associated with the multi-use license is exceeded. In the case of a multi-use license, multiple client devices such as client devices 230-236 may be associated with a single software license and the device fingerprints of each of devices client devices 230-236 may be used by license server 260 to determine if the threshold associated with the multi-use license is exceeded.

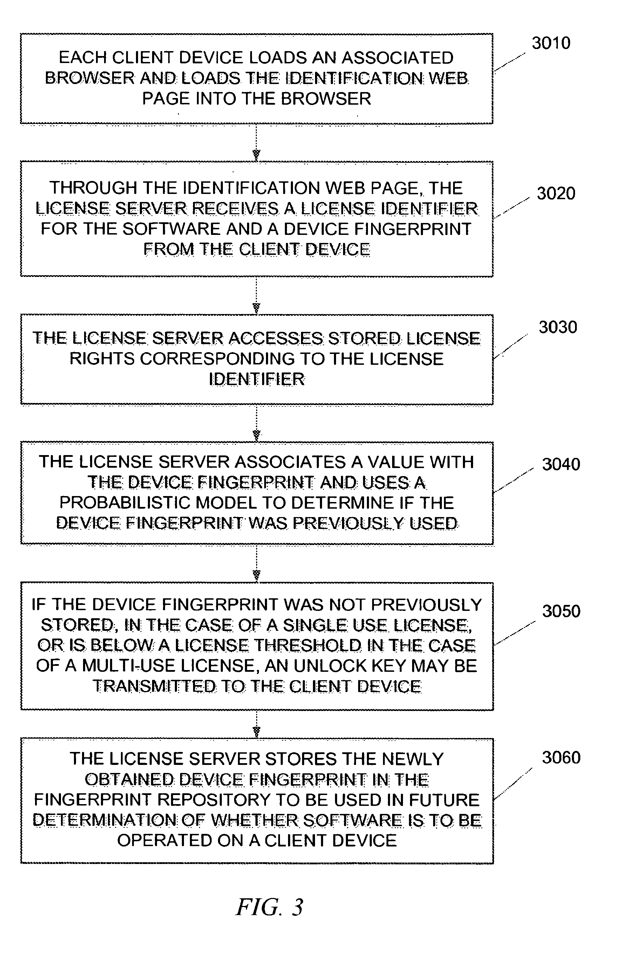

FIG. 3 illustrates an implementation of an embodiment of the invention. At 3010, each client device 220, 230, 240 loads an associated browser and loads the identification web page into the browser. At 3020, through the identification web page, license server 160 receives a license identifier for the software and a device fingerprint from the client device. The license identifier may be a serial number or other data that is uniquely associated with a licensed software or software title. The device fingerprint may be a browser-based forensic fingerprint.

At 3030, license server 160 accesses stored license rights corresponding to the license identifier. The stored license rights provide the basis for the license server 160 to determine whether nor not to allow installation of the software. Such determination may be based on the number of different client devices (e.g., device fingerprints) permitted to install or operate licensed software, a period of time during which the licensed software may be operated, or other measure or parameter of software usage.

According to certain embodiments, the determination may be based on the number of different client devices permitted to install or operate the licensed software. In accordance with these embodiments, the licensed rights may identify a license limit corresponding to the total number of different client devices authorized to operate the licensed software, an actual authorized number of different client devices that have been authorized to operate the licensed software and a listing of such authorized device fingerprints corresponding to the authorized client devices.

At 3040, the license server associates a value with the device fingerprint and uses a probabilistic model to determine if the device fingerprint was previously used. The license server may access the 270 database of licensed rights and to determine if, for example for a given license identifier, the device fingerprint may be re-used because the license identifier is associated with a multi-use license.

At 3050, if the device fingerprint was not previously stored, in the case of a single use license, or is below a license threshold in the case of a multi-use license, an unlock key may be transmitted to the client device. The unlock key may be an unlock code that is configured to allow the licensed software to install or operate on the client device.

At 3060, the license server stores the newly obtained device fingerprint in the fingerprint repository 170/270 to be used in future determination of whether software is to be operated on a client device.

In accordance with aspects of the embodiments described herein, a given client device may generate a device fingerprint that uniquely identifies the client device. The device fingerprint may be generated by a stand-alone program or application that is provided separately from the licensed software or an applet running within a web browser on the client device. Alternatively, the device fingerprint may be generated by a program or application which comprises a part of the licensed software or other software.

The device fingerprint application may include a registration routine that collects information regarding the client device by checking a number of parameters which are expected to be unique to the client device environment. The parameters checked may include, for example, hard disk volume name, user name, device name, user password, hard disk initialization date, etc. The collected information may include information that identifies the hardware comprising the platform on which the web browser runs, such as, for example, CPU number, or unique parameters associated with the firmware in use. The collected information may further include system configuration information, such as amount of memory, type of processor, software or operating system serial number, etc. In the alternative, or in addition, the parameters may checked may include virtual machine specifications. Examples of virtual machine specifications may include, but are not limited to, information relating to virtual processors, virtual BIOS, virtual memory, virtual graphics, virtual IDE drives, virtual SCSI drives, virtual PCI slots, virtual floppy drives, virtual serial (COM) ports, virtual parallel (LPT) ports, virtual key board, virtual mouse and drawing tablets, virtual Ethernet card, virtual networking, virtual sound adapter, etc.

Based on the collected information, the device fingerprint application may generate a device fingerprint that is unique for the client device. The device fingerprint may be generated using a combination of user-configurable and non-user-configurable machine parameters as input to a process that results in the device fingerprint, which may be expressed in digital data as a binary number. Each machine parameter is data determined by a hardware component, software component, or data component specific to the device that the unique identifier pertains to. Machine parameters may be selected based on the target device system configuration such that the resulting device fingerprint has a very high probability (e.g., greater than 99.999%) of being unique to the target device. In addition, the machine parameters may be selected such that the device fingerprint includes at least a stable unique portion up to and including the entire identifier, which has a very high probability of remaining unchanged during normal operation of the target device. Thus, the resulting device fingerprint should be highly specific, unique, reproducible and stable as a result of properly selecting the machine parameters.

The device fingerprint application may also operate on the collected parameters with one or more algorithms to generate the device fingerprint. This process may include at least one irreversible transformation, such as, for example, a cryptographic hash function, such that the input machine parameters cannot be derived from the resulting device fingerprint. Each device fingerprint, to a very high degree of certainty, cannot be generated except by the suitably configured application operating or otherwise having had access to the same field security device for which the device fingerprint was first generated. Conversely, each identifier, again to a very high degree of certainty, can be successfully reproduced by the suitably configured application operating or otherwise having access to the same field security device on which the identifier was first generated.

The device fingerprint application may operate by performing a system scan to determine a present configuration of the field security device. The application may then select the machine parameters to be used as input for generating the unique device fingerprint. Selection of parameters may vary depending on the system configuration. Once the parameters are selected, the application may generate the identifier.

Further, generating the device fingerprint may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

In addition to the chip benchmarking and degradation measurements, the process for generating a device fingerprint may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device fingerprint values during transmission and comparisons. Such encryption processes may be used in conjunction with random sampling and key generations.

In accordance with other aspects of the embodiments described herein, one or more of the techniques and methodologies described herein may be performed by embedded applications, platforms, or systems. The methods described herein may be performed by a general-purpose computer system and/or an embedded application or component of a special-purpose apparatus (e.g., traffic controller, traffic signal, surveillance cameras, sensors, detectors, vehicles, vehicle navigation systems, mobile phones, PDAs, etc.).

In one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; and any other predefined hardware information stored (optionally encrypted) in EEPROM or the like; any variations/combinations thereof.

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

The foregoing description has been directed to specific embodiments of this invention. It will be apparent; however, that other variations and modifications may be made to the described embodiments, with the attainment of some or all of their advantages. Therefore, it is the object of the appended claims to cover all such variations and modifications as come within the true scope of the invention.

## Claims

1. An apparatus (160; 260), comprising:
a network interface connected to at least one client device (120, 130, 140; 220-240) through a computer network (150; 250);
a processor configured to check a device fingerprint that uniquely identifies a client device seeking authorization to operate software; and
a memory comprising program instructions executable by the processor to:
compare the device fingerprint to previously stored device fingerprints to determine if the device fingerprint matches a previously stored device fingerprint;
determine whether a total number of instances of the device fingerprint and the previously stored device fingerprints exceeds a pre-determined threshold established by a license identifier;
authorize a client request for access to software associated with the license identifier if the total number of instances are within the threshold; and
store the device fingerprint
**characterized in that**:
said processor is configured to retrieve said device fingerprint through an Internet connection between the network interface and the client device (120, 130, 140; 220-240), the device fingerprint generated by examining the client device to retrieve information exposed to the apparatus through a web browser of the client device; and
said comparison step comprises probabilistically comparing said device fingerprint to said previously stored device fingerprints.

2. The apparatus of claim 1 wherein the apparatus (160; 260) is configured to make a web page available for execution by the client device (120, 130, 140; 220-240) so that the device fingerprint is retrievable by the apparatus through that web page when executed by the client device.

3. The apparatus of claim 1, wherein the device fingerprint comprises a browser-based forensic fingerprint that includes an IP address of the client device, a version of the web browser being executed by the client device (120, 130, 140; 220-240) and a list of any software exposed to the browser being executed by the client device.

4. The apparatus of claim 3, wherein the list of exposed software includes cached images, history, cookies and any other browser settings visible to the apparatus (160; 260).

5. The apparatus of claim 1, further comprising a database (170; 270), accessible by the processor, that stores licensed rights indicated by the license identifier.

6. The apparatus of claim 5, wherein the licensed rights identify the license limit of different client devices (120, 130, 140; 220-240) authorized to operate the licensed software, an actual authorized number of different client devices authorized to operate the licensed software, and a listing of authorized device fingerprints.

7. A method, comprising steps for:
connecting a server (160; 260) to at least one client device (120, 130, 140; 220-240) through a computer network (150; 250) to establish an Internet connection between the server and the at least one client device;
checking by the server (160; 260) a device fingerprint that uniquely identifies a client device (120, 130, 140; 220-240) seeking authorization to operate software;
comparing by the server (160; 260) the device fingerprint to previously stored device fingerprints and determining if the device fingerprint matches a previously stored device fingerprint;
determining by the server (160; 260) whether a total number of instances of the device fingerprint and the previously stored device fingerprints exceeds a pre-determined threshold established by a license identifier;
in response to the determining step, authorizing by the server (160; 260) a client request for access to software associated with the license identifier if the total number of instances of retrieval is within the threshold; and
storing by the server (160; 260) the device fingerprint
**characterized in that**:
said checking step comprises retrieving by the server said device fingerprint through the Internet connection, the device fingerprint generated by examining the client device to retrieve information exposed to the server through a web browser of the client device; and
said comparison step comprises probabilistically comparing by the server said device fingerprint to said previously stored device fingerprints.

8. The method of claim 7 wherein the retrieving step further comprises making available a web page for execution by the client device (120, 130, 140; 220-240) and retrieving the device fingerprint through that web page executed by the client device.

9. The method of claim 7, wherein the device fingerprint comprises a browser-based forensic fingerprint that includes an IP address of the client device, a version of the web browser being executed by the client device and a list of any software exposed to the browser being executed by the client device (120, 130, 140; 220-240).

10. The method of claim 7, wherein the information exposed to the server includes cached images, history, cookies and any other browser settings visible to the server.

## Patentansprüche

1. Vorrichtung (160; 260), umfassend:
eine Netzwerkschnittstelle, die zu weinigstens einer Clientvorrichtung (120, 130, 140; 220-240) durch ein Computernetzwerk (150; 250) verbunden ist;
einen Prozessor, der eingestellt ist, um einen Vorrichtungsfingerabdruck zu überprüfen, der eine Clientvorrichtung eindeutig identifiziert, welche Autorisierung ersucht, um Software auszuführen; und
einen Speicher, welcher Programmbefehle umfasst, ausführbar durch den Prozessor, um:
den Vorrichtungsfingerabdruck mit vorher gespeicherten Vorrichtungsfingerabdrücken zu vergleichen, um festzustellen, ob der Vorrichtungsfingerabdruck einem vorher gespeicherten Vorrichtungsfingerabdruck entspricht;
festzustellen, ob eine Gesamtanzahl von Instanzen von dem Vorrichtungsfingerabdruck und den vorher gespeicherten Fingerabdrücken einen voreingestellten Schwellenwert überschreitet, welcher durch einen Lizenzidentifizierer eingestellt wird;
eine Clientanfrage zum Zugriff auf Software zu autorisieren, welche mit dem Lizenzidentifizierer assoziiert ist, wenn die Gesamtanzahl von Instanzen innerhalb des Schwellenwertes ist; und
den Vorrichtungsfingerabdrucks zu speichern
**dadurch gekennzeichnet, dass**:
der Prozessor eingestellt ist, um den Vorrichtungsfingerabdruck durch eine Internetverbindung wischen der Netzwerkschnittstelle und der Clientvorrichtung (120, 130, 140; 220-240) zu erhalten, wobei der Vorrichtungsfingerabdruck durch Untersuchung der Clientvorrichtung erzeugt wird, um Informationen zu erhalten, welche von der Clientvorrichtung durch einen Webbrowser der Vorrichtung bereitgestellt werden; und
der Vergleichsschritt stochastisches Vergleichen des Vorrichtungsfingerabdrucks mit den vorher gespeicherten Vorrichtungsfingerabdrücken umfasst.

2. Vorrichtung gemäß Anspruch 1, wobei die Vorrichtung (160; 260) eingestellt ist, um eine Webseite für die Ausführung durch die Clientvorrichtung (120, 130, 140; 220-240) verfügbar zu machen, so dass der Vorrichtungsfingerabdruck durch die Vorrichtung durch diese Webseite erhältlich ist, wenn von der Clientvorrichtung ausgeführt.

3. Vorrichtung gemäß Anspruch 1, wobei der Vorrichtungsfingerabdruck einen browserbasierten forensischen Fingerabdruck umfasst, welcher eine IP Adresse von der Clientvorrichtung beinhaltet, eine Version von dem Webbrowser, welcher durch die Clientvorrichtung (120, 130, 140; 220-240) ausgeführt wird, und eine Liste von jeglicher Software, welche durch den Browser bereitgestellt wird, welcher durch die Clientvorrichtung ausgeführt wird.

4. Vorrichtung gemäß Anspruch 3, wobei die Liste von bereitgestellter Software zwischengespeicherte Bilder, Verlauf, Cookies und alle anderen Browsereinstellungen, welche sichtbar für die Vorrichtung (160; 260) sind, beinhaltet.

5. Vorrichtung gemäß Anspruch 1, ferner umfassend eine Datenbank (170; 270), zugänglich durch den Prozessor, welche lizensierte Rechte, welche durch den Lizenzidentifizierer angezeigt werden, speichert.

6. Vorrichtung gemäß Anspruch 5, wobei die lizenzierten Rechte die Lizenzgrenze von verschiedenen Clientvorrichtungen (120, 130, 140; 220-240), welche autorisiert sind, um die lizenzierte Software auszuführen, eine aktuelle autorisierte Anzahl von verschiedenen Clientvorrichtungen, welche autorisiert sind um die lizenzierte Software auszuführen, und eine Liste von autorisierten Vorrichtungsfingerabdrücken identifiziert.

7. Verfahren, umfassend Schritte zum:
Verbinden eines Servers (160; 260) mit weinigstens einer Clientvorrichtung (120, 130, 140; 220-240) durch ein Computernetzwerk (150; 250), um eine Internetverbindung zwischen dem Server und der weinigstens einen Clientvorrichtung herzustellen;
Überprüfen durch den Server (160; 260) eines Vorrichtungsfingerabdrucks, welcher eindeutig eine Clientvorrichtung (120, 130, 140; 220-240) identifiziert, welche Autorisierung ersucht, um Software auszuführen;
Vergleichen durch den Server (160; 260) des Vorrichtungsfingerabdrucks mit vorher gespeicherten Vorrichtungsfingerabdrücken und Feststellen, ob der Vorrichtungsfingerabdruck einem vorher gespeicherten Vorrichtungsfingerabdruck entspricht;
Feststellen durch den Server (160; 260), ob eine Gesamtanzahl von Instanzen von dem Vorrichtungsfingerabdruck und den vorher gespeicherten Vorrichtungsfingerabdrücken einen voreingestellten Schwellenwert überschreitet, welcher durch einen Lizenzidentifizierer eingestellt wird;
in Antwort auf den Feststellungsschritt, Autorisieren durch den Server (160; 260) einer Clientanfrage zum Zugriff auf Software, welche mit dem Lizenzidentifizierer assoziiert ist, wenn die Gesamtanzahl von Erhaltinstanzen innerhalb des Schwellenwerts ist; und
Speichern durch den Server (160; 260) den Vorrichtungsfingerabdruck **dadurch gekennzeichnet dass**:
der Überprüfungsschritt das Erhalten durch den Server des Vorrichtungsfingerabdrucks durch die Internetverbindung umfasst, wobei der Vorrichtungsfingerabdruck durch Untersuchen der Clientvorrichtung generiert wird, um Informationen zu erhalten, welche dem Server durch einen Webbrowser von der Clientvorrichtung bereitgestellt wird; und
der Vergleichsschritt stochastisches Vergleichen durch den Server des Vorrichtungsfingerabdrucks mit den vorher gespeicherten Vorrichtungsfingerabdrücken umfasst.

8. Verfahren gemäß Anspruch 7, wobei der Erhaltensschritt ferner umfasst Verfügbarmachen einer Webseite zur Ausführung durch die Clientvorrichtung (120, 130, 140; 220-240) und Erhalten des Vorrichtungsfingerabdrucks durch die Webseite, welche durch die Clientvorrichtung ausgeführt wird.

9. Verfahren gemäß Anspruch 7, wobei der Vorrichtungsfingerabdruck einen browserbasierten forensischen Fingerabdruck umfasst, welcher eine IP Adresse von der Clientvorrichtung umfasst eine \/ersion von dem Webbrowser, welcher durch die Clientvorrichtung ausgeführt wird, und eine Liste von jeglicher Software, welche durch den Browser bereitgestellt wird, welcher durch die Clientvorrichtung (120, 130, 140; 220-240) ausgeführt wird.

10. Verfahren gemäß Anspruch 7, wobei die Information, welche dem Server bereitgestellt wird, zwischengespeicherte Bilder, Verlauf, Cookies und alle andere Browsereinstellungen, welche sichtbar für den Server sind, bereitstellt.

## Revendications

1. Système (160 ; 260) comprenant :
une interface réseau connectée à au moins un dispositif client (120, 130, 140 ; 220-240) par l'intermédiaire d'un réseau informatique (150 ; 250) ;
un processeur configuré pour contrôler une empreinte de dispositif qui identifie de manière unique un dispositif client recherchant une autorisation pour utiliser un logiciel ; et
une mémoire comprenant des instructions de programme pouvant être exécutées par le processeur afin de :
comparer l'empreinte de dispositif à des empreintes de dispositif stockées antérieurement pour déterminer si l'empreinte de dispositif coïncide avec une empreinte de dispositif stockée antérieurement ;
déterminer si un nombre total d'occurrences de l'empreinte de dispositif et des empreintes de dispositif stockées antérieurement dépasse un seuil prédéterminé établi par un identificateur de licence ;
autoriser une requête de client permettant l'accès au logiciel associé à l'identificateur de licence si le nombre total d'occurrences se situe dans les limites du seuil ; et
stocker l'empreinte de dispositif
**caractérisé en ce que** :
ledit processeur est configuré pour récupérer ladite empreinte de dispositif par l'intermédiaire d'une connexion Internet entre l'interface réseau et le dispositif client (120, 130, 140 ; 220-240), l'empreinte de dispositif étant générée en examinant le dispositif client afin de récupérer une information exposée sur le système par l'intermédiaire d'un navigateur Web du dispositif client ; et
ladite étape de comparaison comprend une comparaison probabiliste de ladite empreinte de dispositif auxdites empreintes de dispositif stockées antérieurement.

2. Système selon la revendication 1 dans lequel le système (160 ; 260) est configuré en vue de rendre une page Web appropriée pour une exécution par le dispositif client (120, 130, 140 ; 220-240) de façon que l'empreinte de dispositif puisse être récupérée par le système à travers cette page Web lorsqu'elle est exécutée par le dispositif client.

3. Système selon la revendication 1, dans lequel l'empreinte de dispositif comporte une empreinte légale sur la base du navigateur qui inclut une adresse IP du dispositif client, une version du navigateur Web étant exécutée par le dispositif client (120, 130, 140 ; 220-240) et une liste de certains logiciels exposée sur le navigateur étant exécutée par le dispositif client.

4. Système selon la revendication 3, dans lequel la liste de logiciels exposée comprend des images mises en mémoire cache, un historique, des fichiers témoins, et l'un quelconque des autres paramètres de navigateur visibles pour le système (160 ; 260).

5. Système selon la revendication 1, comprenant, de plus, une base de données (170 ; 270) accessible par le processeur, laquelle stocke les droits sous licence indiqués par l'identificateur de licence.

6. Système selon la revendication 5, dans lequel les droits sous licence identifient la limite des licences de différents dispositifs clients (120, 130, 140 ; 220-240) autorisés à utiliser le logiciel sous licence, un nombre réel autorisé de différents dispositifs clients autorisés à utiliser le logiciel sous licence, et une liste des empreintes de dispositif autorisées.

7. Procédé comportant les étapes comprenant le fait de :
connecter un serveur (160 ; 260) à au moins un dispositif client (120, 130, 140 ; 220-240) par l'intermédiaire d'un réseau informatique (150 ; 250) afin d'établir une connexion Internet entre le serveur et le, au moins un, dispositif client ;
contrôler par l'intermédiaire du serveur (160 ; 260) une empreinte de dispositif qui identifie de manière unique un dispositif client (120, 130, 140 ; 220-240) requérant une autorisation pour utiliser le logiciel ;
comparer par l'intermédiaire du serveur (160 ; 260) l'empreinte de dispositif aux empreintes de dispositif stockées antérieurement et déterminer si l'empreinte de dispositif coïncide avec une empreinte de dispositif stockée antérieurement ;
déterminer par l'intermédiaire du serveur (160 ; 260) si le nombre total d'occurrences de l'empreinte de dispositif et des empreintes de dispositif stockées antérieurement dépasse un seuil prédéterminé établi par un identificateur de licence ;
en réponse à l'étape de détermination, autoriser par l'intermédiaire du serveur (160 ; 260) une requête de client à accéder au logiciel associé à l'identificateur de licence si le nombre total d'occurrences d'extraction se situe dans les limites du seuil ; et
stocker par l'intermédiaire du serveur (160 ; 260) l'empreinte de dispositif
**caractérisé en ce que** :
ladite étape de contrôle comporte d'extraire par l'intermédiaire du serveur ladite empreinte de dispositif à travers la connexion Internet, l'empreinte de dispositif étant générée par l'analyse du dispositif client pour extraire l'information exposée sur le serveur par l'intermédiaire d'un navigateur Web du dispositif client ; et
ladite étape de comparaison comprend une comparaison probabiliste par l'intermédiaire du serveur de ladite empreinte de dispositif auxdites empreintes de dispositif stockées antérieurement.

8. Procédé selon la revendication 7, dans lequel l'étape d'extraction comporte, de plus, de rendre disponible la page Web pour une exécution par le dispositif client (120, 130, 140 ; 220-240) et d'extraire l'empreinte du dispositif à travers cette page Web exécutée par le dispositif client.

9. Procédé selon la revendication 7, dans lequel l'empreinte de dispositif comporte une empreinte légale sur la base du navigateur qui inclut une adresse IP du dispositif client, une version du navigateur web étant exécutée par le dispositif client et une liste de certains logiciels exposée sur le navigateur étant exécutée par le dispositif client (120, 130, 140 ; 220-240) .

10. Procédé selon la revendication 7, dans lequel l'information exposée sur le serveur comporte des images mises en mémoire cache, un historique, des fichiers témoins et certains autres paramètres de navigateur visibles sur le serveur.
